Europäisches Patentamt

European Patent Office

Office européen des brevets

(11) Numéro de publication : **0 514 235 A1**

## (12) DEMANDE DE BREVET EUROPEEN

(21) Numéro de dépôt : **92401193.5**

(22) Date de dépôt : **24.04.92**

(51) Int. Cl.⁵ : **B23K 26/04,** G01M 11/00

(30) Priorité : **15.05.91 FR 9105903**

(43) Date de publication de la demande :
**19.11.92 Bulletin 92/47**

(84) Etats contractants désignés :
**BE CH DE ES LI SE**

(71) Demandeur : **FRAMATOME**
**Tour Fiat 1, Place de la Coupole**
**F-92400 Courbevoie (FR)**

(72) Inventeur : **Griffaton, Jacques**
**6, rue Saint Georges**
**F-71100 Chalon Sur Saone (FR)**

(74) Mandataire : **Polus, Camille et al**
**c/o Cabinet Lavoix 2, Place d'Estienne d'Orves**
**F-75441 Paris Cedex 09 (FR)**

(54) **Canne de soudage à faisceau laser, son utilisation pour le manchonnage de tubes et procédé de surveillance de l'intégrité d'une fibre optique de cette canne.**

(57)    Cette canne de soudage est munie d'une tête de soudage (1) comprenant une fibre optique (5) qui émet un faisceau laser focalisé par un dispositif optique (9) sur une paroi (10) à souder où est formé un bain de fusion (12).

La tête de soudage (1) comporte une cellule photoélectrique (45) éclairée par la lumière diffusée autour de l'extrémité de la fibre optique. Le signal émis par la cellule photoélectrique (45) dépend de l'intégrité de la fibre optique (5) et de l'énergie utilisée pour le soudage.

Application au soudage d'un manchon d'étanchéité dans un tube de générateur de vapeur de réacteur nucléaire à eau pressurisée.

EP 0 514 235 A1

La présente invention concerne une canne de soudage à faisceau laser, son utilisation pour la fixation d'un manchon dans un tube par des soudures circulaires, et un procédé de surveillance de l'intégrité d'une fibre optique de cette canne.

On connait déjà dans l'état de la technique une canne de soudage du type à faisceau laser conduit par une fibre optique dans une tête de soudage de la canne, la tête de soudage comportant un dispositif optique pour focaliser le faisceau laser et un miroir 9A destiné à renvoyer le faisceau laser vers un emplacement de soudage extérieur à la tête de soudage.

Les cannes de soudage sont utilisées en particulier pour les opérations de soudage de manchons d'étanchéité dans les tubes d'eau primaire sous pression d'un générateur de vapeur de réacteur nucléaire à eau pressurisée.

La puissance élevée du faisceau laser utilisé dans ce type de canne de soudage a pour conséquence qu'en cas d'apparition d'un défaut de la fibre optique celle-ci se détériore rapidement et peut se détruire, à une vitesse de plusieurs dizaines de centimètres à la seconde.

L'invention a notamment pour but de déceler une éventuelle détérioration de la fibre optique de la canne de soudage et de connaître le niveau de l'énergie qui est émise par le laser et celle rayonnée par la paroi à souder.

A cet effet, l'invention a pour objet une tête de soudage du type précité qui comporte une cellule photoélectrique de mesure d'intensité de rayonnement disposée de façon décalée par rapport à l'axe de la fibre optique et en retrait par rapport à l'extrémité distale de cette fibre.

Suivant d'autres caractéristiques de l'invention:
- la cellule photoélectrique comporte des moyens d'atténuation de son éclairement ;
- les moyens d'atténuation comprennent un conduit d'éclairage, parallèle à la fibre optique, formant un passage pour le rayonnement qui éclaire la cellule photoélectrique ;
- la cellule photoélectrique à une position inclinée, par rapport à l'axe du conduit, qui est intermédiaire entre une première position, parallèle à l'axe du conduit d'éclairage, d'éclairement maximal de la cellule, et une seconde position, perpendiculaire à la première, d'éclairement minimal de la cellule ; et
- la cellule photoélectrique est une cellule au silicium.

Un autre objet de l'invention est l'utilisation d'une canne de soudage pour la fixation d'un manchon dans un tube par des soudures circulaires et, en particulier, d'un manchon de réparation dans un tube de générateur de vapeur de réacteur nucléaire.

Un dernier objet de l'invention est un procédé de surveillance de l'intégrité d'une fibre optique disposée dans une canne de soudage et transmettant un faisceau laser de soudage entre une source laser commandée électriquement et une zone de réception de la canne, la canne de soudage comprenant un dispositif optique de focalisation du faisceau parvenant dans la zone de réception et un miroir destiné à diriger le faisceau laser vers un emplacement de soudage caractérisé par le fait :
- qu'on capte un rayonnement diffusé et/ou réfléchi par le dispositif optique dans la zone de réception de la canne qui est représentatif de l'énergie transmise par la fibre optique et de l'énergie reçue et diffusée par l'emplacement de soudage et renvoyée dans la zone de réception de la canne par le miroir ;
- qu'on convertit le rayonnement capté en un signal électrique ;
- qu'on compare le signal électrique à un seuil prédéterminé ;
- et que, lorsque le signal électrique est inférieur au seuil on commande l'arrêt de l'alimentation de la source laser.

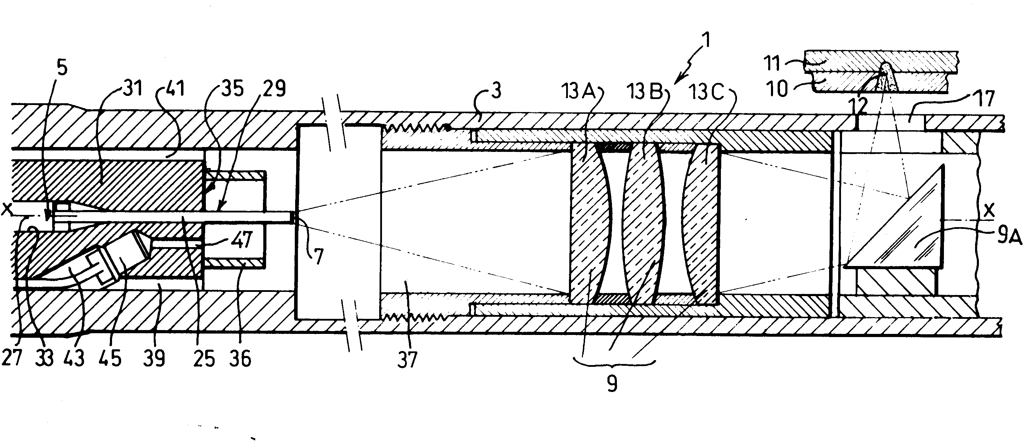

Un example de réalisation de l'invention va être décrit plus en détail en se référant à la figure unique annexée qui est une vue schématique en coupe longitudinale d'une partie d'une tête de soudage d'une canne de soudage selon l'invention.

On a représenté sur la figure une tête de soudage 1 d'une canne de soudage à faisceau laser. La tête de soudage 1 est délimitée par une paroi 3 de forme générale tubulaire à l'intérieur de laquelle est disposée une fibre optique 5 dont l'extrémité distale 7 émet un faisceau laser en direction d'un dispositif optique 9.

Le dispositif optique 9 focalise le faisceau laser émis par l'extrémité 7 de la fibre optique. Ce faisceau est envoyé par un miroir 9A sur un manchon d'étanchéité 10, extérieur à la tête de soudage 1, destiné à être soudé dans un tube 11 de générateur de vapeur de réacteur nucléaire à eau sous pression. Le tube 11 a habituellement un diamètre intérieur d'environ 20 mm. Le faisceau laser chauffe le manchon 10 et le tube 11 en formant un bain de fusion 12.

Le dispositif optique 9 comprend deux à trois lentilles juxtaposées 13A,13B,13C pour collimater et focaliser le faisceau laser. Le miroir 9A est incliné à 45° et adapté pour renvoyer radialement le faisceau laser focalisé à travers une fenêtre latérale 17 de la tête de soudage sur le manchon 10 à souder.

La tête 1 est rotative autour de son axe X-X, qui est également l'axe de la fibre optique 5. La rotation de la tête de soudage 1 permet de réaliser des soudures circulaires.

On décrit maintenant la fibre optique 5 conduisant le faisceau laser et sa disposition dans la tête de soudage. La fibre optique 5 comprend une âme 25 enveloppée d'une gaine 27 sauf sur sa partie terminale 29 qui est dénudée. La fibre optique 5 est portée par un manchon de positionnement 31 en étant enfilée dans un conduit axial 33 de celui-ci. Le conduit 33 débouche par la tranche d'extrémité 35 du manchon de positionnaient 31 dans une zone de réception de la partie terminale 29 de !a fibre optique 5 délimitée par l'intérieur d'une bague 36 prolongeant le manchon 31 suivant l'axe X-X. La partie terminale 29 de !a fibre optique traverse la bague 36 et fait saillie dans une chambre 37 séparant le manchon 31 du dispositif optique 9, perpendiculairement à la tranche d'extrémité 35 du manchon, suivant l'axe X-X, sur une longueur pouvant atteindre voire dépasser 10 mm. La disposition saillante de la partie terminale 29 permet l'émission d'un faisceau laser de puissance élevée par l'extrémité 7 de la fibre optique sans détérioration de celle-ci par échauffement.

Le manchon de positionnement 31 comporte en outre des rainures périphériques longitudinales 39,41 formant des passages pour des gaz neutres ou actifs utilisés habituellement pour les opérations de soudage en atmosphère contrôlée. Dans le même but, les lentilles comportent des encoches latérales (non représentées) ou sont supportées par des fourreaux et entretoises ajourées (non représentés) qui autorisent le passage du gaz.

On voit également sur la figure que le manchon de positionnement 31 comprend, à partir de sa paroi périphérique, un trou borgne 43 incliné par rapport à l'axe du manchon, où est logée une cellule photoélectrique 45, et, à partir de sa tranche d'extrémité 35, un conduit d'éclairage 47, parallèle à l'axe du manchon de positionnement, reliant le fond du trou incliné 43 à la chambre 37. Le conduit d'éclairage 47 débouche à l'intérieur de la bague 36.

Le passage du faisceau laser de puissance élevée à travers les dioptres du dispositif optique 9 crée des réflexions et des diffusions multiples de rayons qui éclairent la chambre 37 et l'intérieur de la bague 36 autour de la partie terminale 29 de la fibre optique. De même, le bain de fusion 12 diffuse un rayonnement qui est renvoyé par le miroir 9A et qui se propage par le dispositif optique 9 dans la chambre 37 suivant une direction générale amont opposée au sens du faisceau laser.

La cellule 45 est positionnée dans la tête de soudage 1 de façon à être éclairée par le rayonnement ainsi diffusé dans la chambre 37 et l'intérieur de la bague 36.

La cellule photoélectrique 45 est adaptée pour recevoir un rayonnement d'intensité lumineuse faible par rapport à la puissance du laser. Le rayonnement diffusé dans la chambre 37 et à l'intérieur de la bague 36 a une intensité susceptible d'éblouir et de saturer la cellule photoélectrique. La disposition de la cellule photoélectrique 45 dans la tête de soudage permet d'éviter l'éblouissement de la cellule. La cellule photoélectrique 45 est éclairée uniquement par le rayonnement diffusé dans la chambre 37 qui traverse le conduit d'éclairage 47. Ce dernier atténue l'éclairage de la cellule photoélectrique 45 et l'adapte à la sensibilité de la cellule.

La cellule photoélectrique 45 délivre un signal électrique qui varie en fonction de l'inclinaison des rayons qui l'éclairent, le flux étant maximal pour des rayons parallèles à l'axe de la cellule et minimal pour des rayons perpendiculaires à cet axe. La position inclinée de la cellule 45 dans le trou 43 du manchon de positionnement est intermédiaire entre une première position, parallèle à l'axe du conduit d'éclairage 47, d'éclairement maximal de la cellule 45, et une seconde position, perpendiculaire à la première, d'éclairaient minimal de la cellule 45.

Lorsque la fibre optique 5 conduisant le faisceau laser est en bon état, la cellule photoélectrique 45 reçoit un certain éclairage et produit un signal électrique qui en est fonction. Pour déceler la détérioration éventuelle de la fibre optique 5, on compare ce signal à un seuil fixé par l'expérience, qui dépend notamment de la géométrie de la tête de soudage, de la qualité de réalisation des pièces, de la qualité de la soudure et de la puissance émise par le laser. Lorsque le signal est supérieur ou égal au seuil prédéterminé, on est assuré du bon état.de la fibre. Lorsque le signal devient inférieur au seuil prédéterminé, on commande électriquement l'arrêt de la source laser ce qui permet de stopper la détérioration de la fibre optique.

Par ailleurs, le signal électrique délivré par la cellule photoélectrique 45 est fonction de l'énergie totale émise par le laser et fournie par le bain de fusion 12, ce qui permet d'apprécier la qualité du bain de soudure 12.

La cellule photoélectrique 45 permet donc de surveiller l'intégrité de la fibre optique 5 en étant disposée à l'intérieur de la tête de soudage.

Ainsi, on est assuré qu'une soudure est faite dans de bonnes conditions et que la soudure suivante peut se faire dans des bonnes conditions de transmission de la puissance de la source laser à travers la fibre optique.

On a montré un exemple d'utilisation de la canne de soudage selon l'invention pour le soudage d'un manchon d'étanchéité dans un tube de générateur de vapeur de réacteur nucléaire, mais d'autres utilisations de cette canne de soudage, ou de cannes analogues, sont possibles pour souder des parois diverses.

## Revendications

1. Canne de soudage du type à faisceau laser conduit par une fibre optique (5) dans une tête de soudage (1) de la canne, la tête de soudage (1) comportant un dispositif optique (9) pour focaliser le faisceau laser et un miroir (9A) destiné à renvoyer le faisceau laser vers un emplacement de soudage (12) extérieur à la tête de soudage (1), caractérisée en ce que la tête de soudage (1) comporte une cellule photoélectrique (45) de mesure d'intensité de rayonnement disposée de façon décalée par rapport à l'axe de la fibre optique (5) et en retrait par rapport à l'extrémité distale (7) de cette fibre.

2. Canne de soudage selon la revendication 1, caractérisée en ce que la cellule photoélectrique (45) comporte des moyens (47) d'atténuation de son éclairement.

3. Canne de soudage selon la revendication 2, caractérisée en ce que les moyens d'atténuation comprennent un conduit d'éclairage (47), parallèle à la fibre optique (5), formant un passage pour le rayonnement qui éclaire la cellule photoélectrique (45).

4. Canne de soudage selon la revendication 3, caractérisée en ce que la cellule photoélectrique (45) a une position inclinée, par rapport à l'axe du conduit (47), qui est intermédiaire entre une première position, parallèle à l'axe du conduit d'éclairage (47), d'éclairement maximal de la cellule, et une seconde position, perpendiculaire à la première, d'éclairement minimal de la cellule.

5. Canne de soudage selon l'une quelconque des revendications précédentes, caractérisée en ce que la cellule photoélectrique (45) est une cellule au silicium.

6. Utilisation d'une canne de soudage selon l'une quelconque des revendications 1 à 5 pour la fixation d'un manchon (10) dans un tube (11) par des soudures circulaires, en particulier d'un manchon de réparation dans un tube de générateur de vapeur de réacteur nucléaire.

7. Procédé de surveillance de l'intégrité d'une fibre optique (5) disposée dans une canne de soudage et transmettant un faisceau laser de soudage entre une source laser commandée électriquement et une zone de réception de la canne, la canne de soudage comprenant un dispositif optique (9) de focalisation du faisceau parvenant dans la zone de réception et un miroir (9A) destiné à diriger le faisceau laser vers un emplacement de soudage (12) caractérisé par le fait :

   - qu'on capte un rayonnement diffusé et/ou réfléchi par le dispositif ontique (9) dans la zone de réception de la canne qui est représentatif de l'énergie transmise par la fibre optique (5) et de l'énergie reçue et diffusée par l'emplacement de soudage (12) et renvoyée dans la zone de réception de la canne par le miroir (9A),
   - qu'on convertit le rayonnement capté en un signal électrique ;
   - qu'on compare le signal électrique à un seuil prédéterminé ;
   - et que, lorsque le signal électrique est inférieur au seuil on commande l'arrêt de l'alimentation de la source laser.

Office européen
des brevets

**RAPPORT DE RECHERCHE EUROPEENNE**

Numero de la demande

EP  92 40 1193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0 408 405 (FRAMATOME)<br>* le document en entier *<br>--- | 1-7 | B23K26/04<br>G01M11/00 |
| Y | DE-A-2 832 847 (SIGMA INSTRUMENTE GMBH)<br>* page 9, alinéa 2 - page 11, alinéa 1; figures 5,6 *<br><br>----- | 1-7 | |

**DOMAINES TECHNIQUES RECHERCHES (Int. Cl.5 )**

B23K
G01M

Le présent rapport a été établi pour toutes les revendications

| Lieu de la recherche | Date d'achèvement de la recherche | Examinateur |
|---|---|---|
| LA HAYE | 11 AOUT 1992 | ARAN D.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)